(19) **Europäisches Patentamt**
**European Patent Office**
**Office européen des brevets**

(11) **EP 1 494 499 B1**

(12) **EUROPEAN PATENT SPECIFICATION**

(45) Date of publication and mention
of the grant of the patent:
**07.01.2009 Bulletin 2009/02**

(51) Int Cl.:
**H04Q 11/04** (2006.01)

(21) Application number: **04102315.1**

(22) Date of filing: **26.05.2004**

(54) **Ideal transfer of call handling from automated systems to human operators**

Ideale Umlegung von Anrufssteuerung von automatisierten Systemen zu menschlichen Operateuren

Transfert idéal de traitement d'appels depuis des systèmes automatisés à des opérateurs humains

(84) Designated Contracting States:
**AT BE BG CH CY CZ DE DK EE ES FI FR GB GR HU IE IT LI LU MC NL PL PT RO SE SI SK TR**

(30) Priority: **30.06.2003 US 610486**

(43) Date of publication of application:
**05.01.2005 Bulletin 2005/01**

(73) Proprietor: **MICROSOFT CORPORATION**
**Redmond, Washington 98052-6399 (US)**

(72) Inventors:
 • **Horvitz, Eric J.**
 **Kirkland,**
 **Washington 98033 (US)**

 • **Paek, Timothy S.**
 **Issaquah,**
 **Washington 98027 (US)**

(74) Representative: **Grünecker, Kinkeldey,**
 **Stockmair & Schwanhäusser**
 **Anwaltssozietät**
 **Leopoldstrasse 4**
 **80802 München (DE)**

(56) References cited:
 **EP-A- 1 176 838**          **US-A1- 2003 035 532**

**Description**

TECHNICAL FIELD

The present invention relates generally to systems and methods that facilitate communications between devices, systems, processes, and/or individuals. More particularly, the present invention relates to employment of dynamic policies for transferring people from an automated call routing system to a human operator given the likelihood of success, the effort associated with continuing to interact with an automated system and the wait times associated with entering a queue for a human operator.

BACKGROUND OF THE INVENTION

Many users have had experiences with the use of automated speech-recognition based call routing systems for accessing data and services by telephone. Such systems have proliferated lately with the advent of more accurate spoken command-and-control and continuous speech recognition systems for limited domains. Even when the scope of an application is restricted, however, such systems can produce frustrating failures. To address user frustration, many designers put in place options for callers to be immediately routed to a live, human operator. Beyond speech recognition systems, other automated systems have been deployed such as the use of touch-tone driven menu systems. Such systems may frustrate users in providing a fixed set of options that either may not appear to offer the right options, offer options that have understandable relevance, and/or may appear to route the caller to a frustrating sequence of options rather than converging quickly to a desired setting.

A growing number of organizations are using automated call-routing systems that employ touch-tone routing or speech recognition and natural language processing to assist users with navigation. Automated methods are employed to reduce the load on operators or to reduce costs associated with staffing of call reception and routing functions. However, failures and frustrations of automated reception and routing can be costly to callers and to organizations employing them as callers may have to put in more effort, wait longer times, or simply hang up in frustration and take their business elsewhere.

There has been a recent growth in the popularity of deploying speech recognition systems. One reason for the popularity of such systems is their promise at providing a more natural interface than touch-tone routing. However, organizations have been discovering that voice routing still falls short of the quality of service that a live, human operator can provide. In one example, an automated call routing system may field all internal directory assistance calls. Using speech recognition, the system attempts to uniquely identify one of over thousands of possible name entries in a company's global address book. Needless to say, a vocabulary of this size is bound to have deleterious effects on the performance of the speech engine.

US 2003/035532 A1 relates to a web-based distributed call center architecture. Interactive voice response unit technology or DTMF key sequences can be used by call centers to prompt the caller as to the type of information he or she needs, or the particular department to which the incoming call should be directed. An operation provided by the distributed call center is the queuing at the call center system of each of the received customer contact requests until a customer service representative (CSR) is available for handling the request. A further operation could be the receiving of revised location information from one or more of the CSRs, wherein the revised location information indicates a different location where the CSR is located. A selected one of the queued customer contact requests can be routed by the call center system to a particular CSR using received location information or the received revised location information. Therefore, customer-specific information pertaining to a selected one of the received customer contact requests needs to be obtained and forwarded to a particular CSR.

EP-A-1 176 838 relates to an architecture and related method for obtaining computer/telephony integration. A "web intelligent network" allows interaction between a subscriber's information system and a service control point of an intelligent network via the internet. A communication platform uses user telephony agents (UTAs) to provide network-based computer telephony integration (CTI) services to subscribers (typically one UTA per subscriber). Further, a telephony agent provides a secured remote extension of the user's intranet via a VPN link. The main function of a UTA is to handle incoming telephone calls on behalf of the respective subscriber.

SUMMARY OF THE INVENTION

It is the object of the invention to improve a call routing system and to enhance the transferring of calls.

This object is solved by the present invention as claimed in the independent claims.

Preferred embodiments are defined by the dependent claims.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention relates to guiding calls in accordance with an automated call routing system. One or more decision models are provided that output policies for switching people from an ongoing automated system to a human operator based on context-sensitive analysis of the spoken dialog situation at hand. This also relates to applying decision-theoretic principles to reason about the ideal melding of people and automated reasoning systems. Thus, callers' experiences with a call routing system are optimized by developing models that consider the probability that callers will be ultimately successful (or not) in their collaboration with the automated system, the expected number of steps required for that success, and the current load on human personnel. In one aspect, a voice routing system for directory assistance can be analyzed via data logs of a system's performance. One or more probabilistic models can then be constructed from the data logs regarding the likelihood of success or failure with the automated system, and the number of steps, overall duration, effort, or frustration with the use of the automated system, given that there will be eventual success of the interaction. The present invention couples path-dependent probabilities from learned models with a decision analysis to optimally guide the transfer of calls to a human operator, given information about the expected current wait times associated with a transfer to a human operator.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

BRIEF DESCRIPTION OF THE DRAWINGS

Fig. 1 is a schematic block diagram illustrating an automated call routing and decision system in accordance with an aspect of the present invention.
Fig. 2 is a diagram illustrating call routing statistical data in accordance with an aspect of the present invention.
Fig. 3 is a diagram illustrating dialog features in accordance with an aspect of the present invention.
Fig. 4 is diagram illustrating a probability tree in accordance with an aspect of the present invention.
Fig. 5 is a diagram illustrating a dependency network for dialog features in accordance with an aspect of the present invention.
Fig. 6 is a diagram illustrating a Markov Dependency network in accordance with an aspect of the present invention.
Fig. 7 is a prior distribution of an expected number of dialog steps in accordance with an aspect of the present invention.
Fig. 8 is a flow diagram illustrating systematic automated call routing according to an aspect of the present invention.
Fig. 9 is a schematic block diagram illustrating a suitable operating environment in accordance with an aspect of the present invention.
Fig. 10 is a schematic block diagram of a sample-computing environment with which the present invention can interact.

DETAILED DESCRIPTION OF THE INVENTION

The subject invention employs decision theory in connection with managing calls. More particularly, management of call traffic and handling of specific calls is important to many businesses, and the subject invention employs decision theory in connection with optimizing handling of calls. An automatic call answering system can be employed until the cost associated therewith (*e.g.*, customer hanging up) outweighs the benefits (*e.g.*, minimizing human intervention to deal with the call). Thus, a system in accordance with the invention employs a decision-theoretic based framework to take a most appropriate action (*e.g.*, use automatic call answering system, and use of call answering system, switch to human operator, route call to different service...) based upon utilities associated with a particular component for answering a call and/or handling of call traffic, state of caller(s), state of entity receiving call(s), bandwidth, resources, and nature of call, for example. Thus, the subject invention optimizes utilization of resources via employment of decision theory and one more models that are trained from past activity logs.

As used in this application, the terms "component," "model," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

As used herein, the term "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic; that is, the computation of a probability distribution over states of interest based on a consideration of data and events. Inference can also refer to logical inferences, including deterministic techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

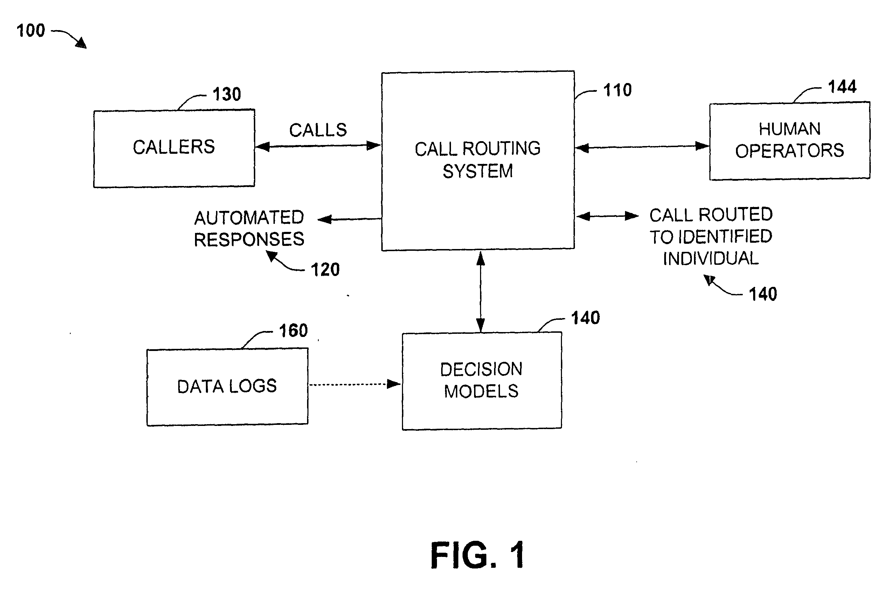

Referring initially to Fig. 1, a call routing and decision system 100 is illustrated in accordance with an aspect of the present invention. The system 100 includes an automated call routing system 110 that is routinely employed for providing automated responses 120 to one or more callers 130. These systems include processing components, switching components, electronic directories, and associated software such as speech recognition components for communicating with the callers 130 and routing calls to an identified individual at 140 (*e.g.*, voice command indicating individuals last name). If callers 130 have trouble making a connection with an individual or party, the call routing system 110 can connect to a human operator 144 to provide further assistance to the callers.

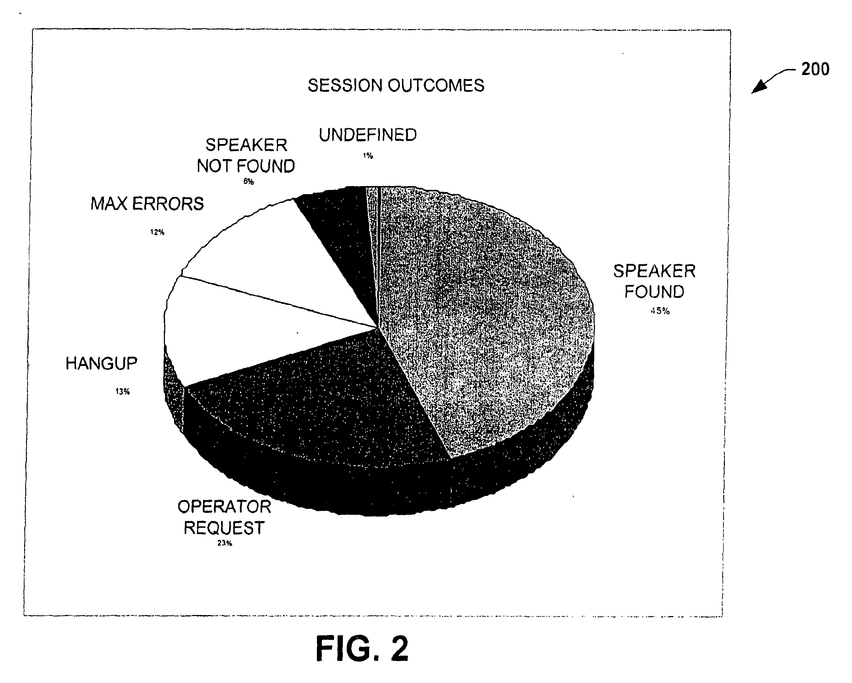

In accordance with one aspect of the present invention, one or more decision models 150 are employed with the call routing system 110 to facilitate efficient operations of the system 100, provide more efficient coupling between callers and respondents, and mitigate caller frustration when interacting with such systems. In one aspect, this is achieved by training the decision models 150 *via* a data log 160 that has recorded data of past activities and interactions with the call routing system 110. Output from the decision models 150 is then employed for call routing determinations. Such data includes statistical information such as how often speakers have been found or not found, how often an operator has been requested and so forth wherein this data is described in more detail below with respect to Fig. 2. After the decision models have been trained, the call routing system 100 works in concert with the models to facilitate call routing between callers and individuals to be contacted. As will be described in more detail below, the models 150 can be employed in accordance with dynamic policies relating to the costs and benefits of switching a caller to the human operator, for example.

Referring now to Fig. 2, diagram 200 illustrates statistical data that is analyzed in accordance with an aspect of the present invention. Although various categories of data are depicted by the diagram 200, it is to be appreciated that other categories of statistics relating to call routing performance can be similarly analyzed (*e.g.*, average amount of time to connect). To assess the overall performance of the system described above with respect to Fig. 1, over 250 megabytes of data logs covering a period of roughly one year was obtained. The log contained close to 60,000 transcriptions of individual sessions with a call routing system, capturing respective system and caller actions. Some possible outcomes for a given session are as follows:

- *SpeakFound*: The system finds the name in the directory.
- *SpeakNotFound*: The system infers that the person requested may not be in the directory, and routes the call to an operator.
- *OperatorRequest*: The user requests an operator by pressing '0'.
- *HelpRequest*: The user tries to request help by pressing '*' or '#'.
- *HangUp*: The user quits during the session.
- *MaxErrrors*: The system reaches the maximum number of allowed mistakes, and routes the call to an operator.
- *NotReady*: The system is temporarily out of service.
- *Undefined*: The user tries to press a numeric key.

The diagram 200 depicts an overall breakdown of all individual sessions into their possible outcomes. Due primarily to the large list of employee names in a sample company directory, a call routing system without associated models and policies achieved a dismal success rate of 45%, corresponding to the percentage of *SpeakFound* outcomes where the system correctly identified the proper name without the user attempting to request help from a human operator. The success rate jumps to 66% when session logs in which the caller did not even attempt to speak a name are removed. The situations where no interaction is attempted disclose the unsettling fact that many callers are likely to completely bypassing interaction with the system. In fact, these "no-name" attempts comprised 31% of the entire data, 85% of all *OperatorRequest* outcomes and 53% of all *HangUp* outcomes. In other words, roughly one out of every three callers decide to completely avoid interacting with the system unaided by attendant models. A longitudinal analysis of no-name cases over several months revealed that users appeared to be learning to immediately request a human operator. In fact, the correlation between a no-name situation and an "OperatorRequest" outcome was significant at $\rho = .88$. This correlation went up to $\rho = .90$ after the engineer responsible for the system added the phrase "for an operator, press '0'" to the introductory prompt, which had the effect of instructing users how to avoid working with the automated system.

These findings were employed to characterize and optimize users' experiences *via* the models described above to more effectively enable callers to interact with the automated call routing system.

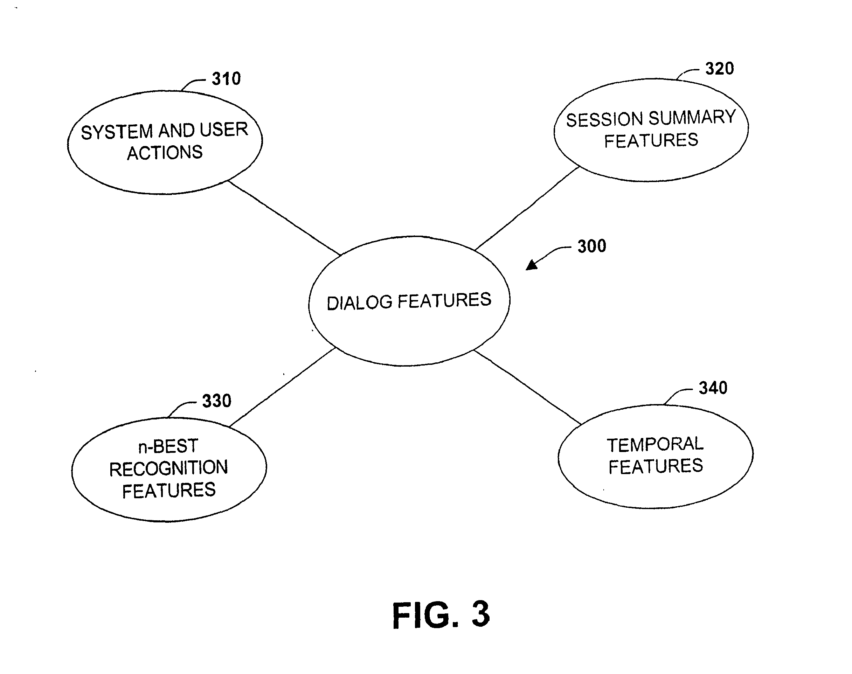

Turning to Fig. 3, one or more dialog features 300 are illustrated in accordance with an aspect of the present invention. Call routing systems typically treat policies for transferring users to an operator in an ad-hoc manner using handcrafted rules composed of various dialog features, such as the number of questions asked so far in a session. Rather than relying on intuition to construct the rules, the present invention builds probabilistic models from a large database of session logs with the intention of discovering dialog features that were predictive of success or failure. The dialog features employed for learning the models fall into four broad categories:

- System and user actions at 310 (*e.g.*, asking the user to pick between the top two guesses, the user has pressed a key, *etc.*)
- Session summary features at 320 (*e.g.*, number of name attempts detected, overall duration, *etc.*)
- *n*-best recognitions features at 330 (*e.g.*, range of confidence scores assigned by the speech recognition subsystem, mode, greatest consecutive score difference, count of the most frequent first/last/full names, *etc.*)
- Generalized temporal features 340 (*e.g.*, number of recurring first names that match in consecutive turns, *etc.*)

The *n*-best recognitions features 330 can be derived from a speech recognizer, and the generalized temporal features 340 were included to cover trends between *n*-best lists. Using varying amounts of feature information, three classes of models (can be more or less than three) were built to estimate the likelihood that a session with the call routing system would eventually end in success or failure.

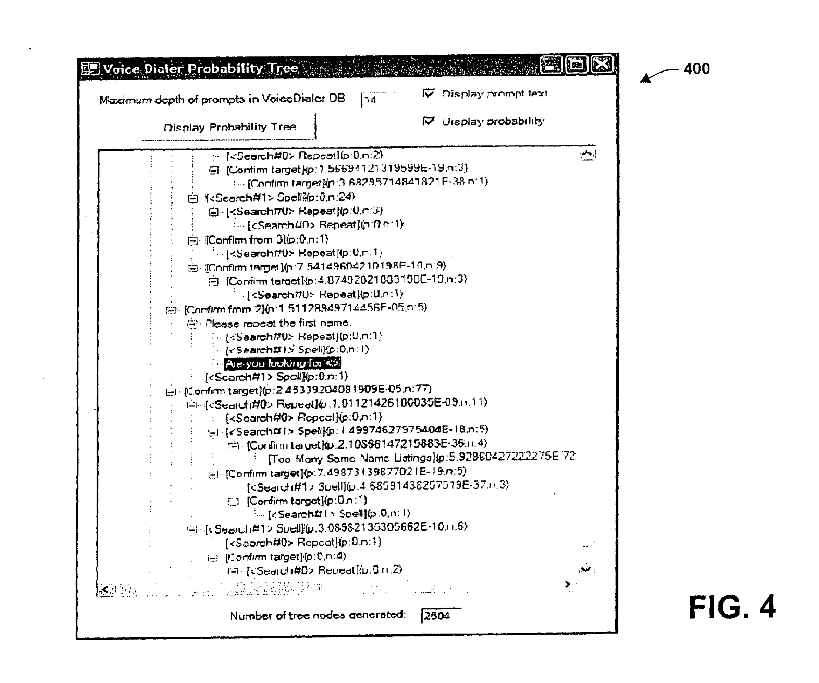

Referring now to Fig. 4, a probability tree 400 showing the likelihood of success given any sequence of system actions is illustrated in accordance with an aspect of the present invention. Conditioning on a sequence of actions taken by a call routing system system, a likelihood of success can be determined, that is, $p(SpeakFound|E)$, wherein observational evidence $E$ refers to all system actions taken so far, by counting the number of cases along the action sequence that resulted in success over the total number of cases along the sequence. The probabilities can be visually displayed as a tree 400 where each branch represents the system action, as shown in Fig. 4.

Table 1 below provides an expanded view of several dialog branches extracted from the tree 400, where $n$ refers to the number of callers reaching that state in the data logs. According to the probability tree 400, the first system action [Operator Intro], which gives a standard prompt but appends the phrase "For an operator, please press '0'," has only a 45% chance of succeeding. Interestingly, if the system subsequently asks the caller to repeat the entire name and then asks the caller to pick among three possible guesses, the likelihood of success increases to 66%. The increased probability of success for this initial interaction is atypical for dialog with the automated system as a whole. Typically, the longer the sequence of actions or path along the tree, the less likely it is that success will be achieved.

**Table 1**: Expanded portion of several branches of the tree capturing probabilities of success given path.

| |
|---|
| [Operator Intro] (p:0.45,n:51134) |
| [Operator Intro] » [Repeat full name] (p:0.45,n:20570) |
| [Operator Intro] » [Repeat full name] » [Confirm from 3] (p:0.66,n:156) |
| [Operator Intro] » [Repeat full name] » [Confirm from 3] » [Repeat first name] (p:0.17,n:24) |
| [Operator Intro] » [Repeat full name] » [Confirm from 3] » [Repeat first name] » [Repeat first name] (p:0,n:8) |

The advantage of the marginal probability tree model 400 is simplicity. The data that is required to build the tree 400 is a sequence of system actions for respective sessions and the ultimate outcome. As we will be described in the following section, the sequence of system actions happens to be the most predictive factor in determining success. The drawback to this model 400 is that the longer the sequence of actions, or path down the tree, the sparser the set of cases for building robust predictors of the likelihood of success.

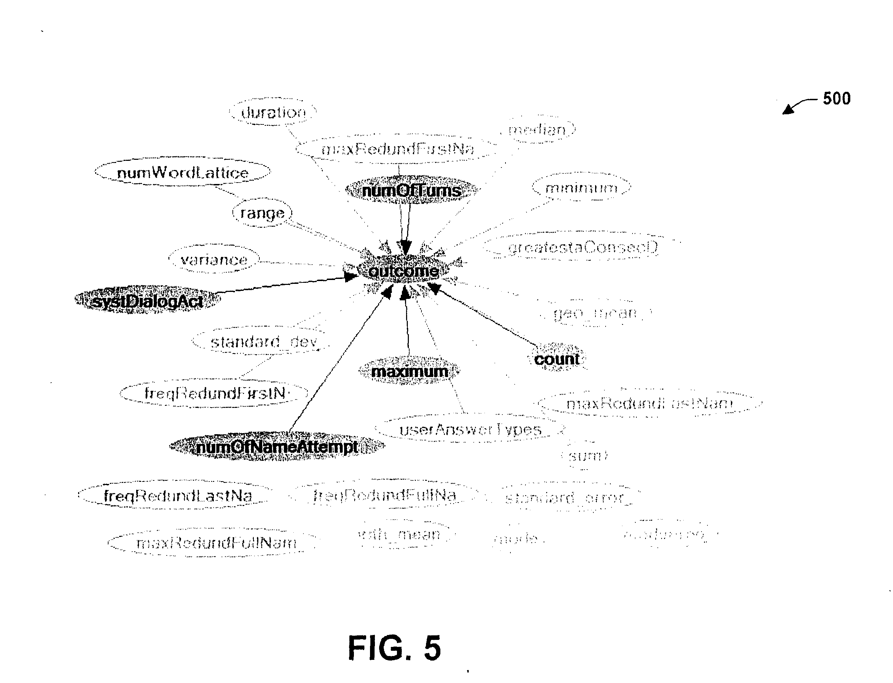

Fig. 5 illustrates a dependency network 500 for dialog features in accordance with an aspect of the present invention. Exploiting the four categories of dialog features discussed previously, another aspect of the present invention employs a Bayesian structure learning to build probabilistic models for predicting session outcome. A Bayesian learning tool that performs structure search and model scoring for different predictive models given a data set can be employed to learn a predictive model. As an example, the WinMine toolkit (Chickering *et al.* 1997) can be employed to build a dependency network and associated decision tree considering session outcome and other dialog features as input variables.

The top five dialog features for predicting outcome are displayed in the diagram 500 in order of dependency strength are as follows: (1) the sequence of system actions, (2) the count or number of alternates in the *n*-best recognitions list, (3) the number of times the user attempted to speak a name, (4) the largest confidence score assigned by the system, and (5) the number of dialog turns - defined as a question-answer pair.

The dependency model 500 resonates with findings in the probability tree in that the dependency with the strongest link to outcome is the sequence of system actions. In the corresponding decision tree for the dependency network, it was found that the first decision split occurs when the system either does or does not identify the proper name after one confirmation attempt. If the confirmation is successful, then the likelihood of a *SpeakFound* session is almost certain at 99%. Otherwise, the decision tree 500 considers other dialog features to predict success. Consistent with the idea that the longer the sequence of actions, the lower the chance of success, it was found that two of the next five strongest connections were related to the length of the dialog. The remaining three features were parameters output by the speech recognizer.

Given that the likelihood of success is closely tied to the length of the dialog, analysis was directed at how the decision rule split the fifth strongest dependency, the number of dialog turns. Since the split occurred at 2 dialog turns, the data set was divided by the number of turns and models were constructed for the first turn, second turn, and greater than two turns.

Table 2: Top five dependencies for one dialog turn, two turns, and more than two turns.

| Model | Top | Second | Third | Fourth | Fifth |
|---|---|---|---|---|---|
| 1 turn | Number of alternates | Range of scores | Skewness of scores | Number of dialog turns | Kurtosis of scores |
| 2 turns | Number of dialog turns | Redundant first names | Number of alternates | Redundant last names | Count of *n*-Best Lists |
| >2 turns | Number of names heard | Number of dialog turns | Session duration | Sum of scores | Number of alternates |

Table 2 displays the top five influencing variables for the respective dependency network models. Notice that for the first turn, almost all of the top five variables relate to the *n*-best recognition list generated by the speech recognizer, including the distribution characteristics of the confidence scores such as skewness and kurtosis. In moving to the second turn, however, generalized temporal features come into play, such as the maximum number of times a first or last name from the first dialog turn shows up again in the second turn. After two turns, the dialog features relate mostly to the length of the dialog.

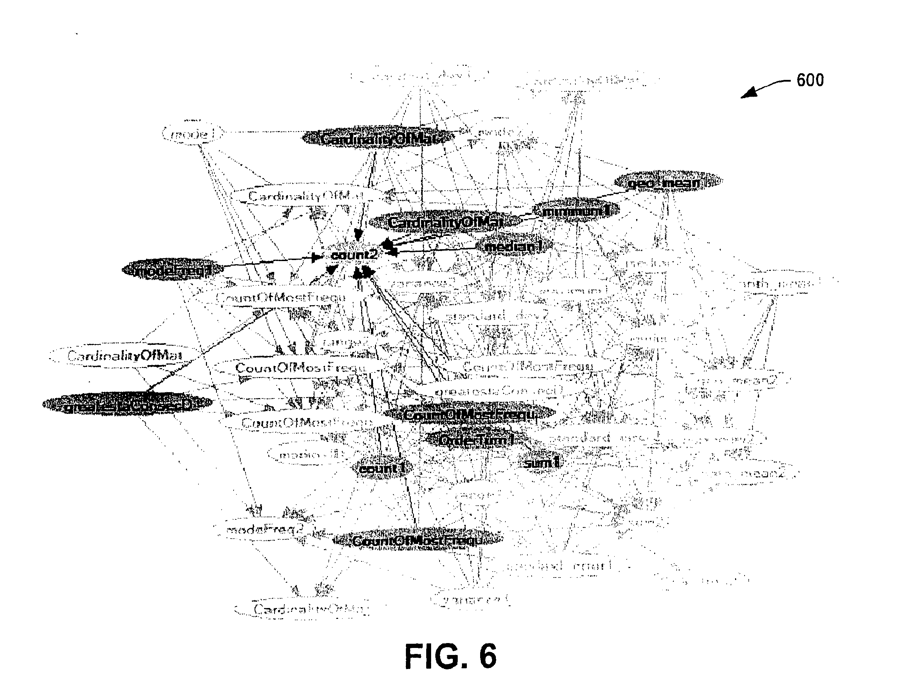

Referring to Fig. 6, a Markov Dependency network 600 in accordance with an aspect of the present invention. In order to flesh out features from the speech recognizer that might be predictive of performance in the next turn, temporal dependency networks for Markov pairs of *n*-best recognition list features were constructed. Fig. 6 displays the Markov dependency network 600. Since the count or number of alternates in the *n*-best recognition list was consistently selected to be one of the most strongest dependencies, the dependency network shows how it is possible to predict the number of alternates in turn $t$ from *n*-best list features in turn $t-1$.

In order to evaluate the predictive performance of the probabilistic models described above, the classification accuracy of the learned models was compared against a marginal model capturing the overall run-time statistics for the training set. The models resulted from splitting the original dataset 70/30 into training and holdout data sets. As the probabilistic models were targeted for guiding decisions about dispatch, the outcome variable was circumscribed into two possible classification states: *success* versus *failure,* where success corresponds to the SpeakFound state. Table 3 below presents the results of the classification task on the holdout data for models examining the first dialog turn, the second turn, greater than two turns, and finally, the complete dataset.

The partial-dialog models outperform the full model as well as the marginal for respective dialog turn datasets with the highest accuracy on the first dialog turn at 94% accuracy. The full model also achieves 85% on the complete dataset but provides poorer results when the dataset is decomposed by dialog turn. It is understood that increases in the amount of data can boost the partial models for dialog turn over the marginal models.

Table 3: Classification accuracy of the marginal, full, and partial-dialog models.

| Model | Turn 1 (5792) | Turn 2 (3741) | Turn >2 (2652) | Complete (12185) |
|---|---|---|---|---|
| Marginal | 0.6979 | 0.6867 | 0.5199 | 0.6516 |
| Full | 0.7029 | 0.699 | 0.3872 | 0.8514 |
| Turn 1 | 0.9404 | n/a | n/a | n/a |

(continued)

| Model | Turn 1 (5792) | Turn 2 (3741) | Turn >2 (2652) | Complete (12185) |
|-------|---------------|---------------|----------------|------------------|
| Turn 2 | n/a | 0.8083 | n/a | n/a |
| Turn >2 | n/a | n/a | 0.7164 | n/a |

Beyond probing the probabilistic relationships among dialog behavior and success, a goal of the present invention has been to harness the probabilistic models in dynamic decisions about the costs and benefits of shifting a caller to a human operator. Having access to probabilities of the eventual success of a session with an automated system, as a function of the observed state of a dialog, provides a control surface enabling such decision-making.

Qualitatively, probabilistic models with the ability to provide predictions about outcomes provide an immediate way for administrators of automated call routing systems to specify preferences regarding the transfer of callers to a human operator. Such preferences can be represented as a tolerated threshold on failure as a function of the current expected time that callers will have to wait for a human operator, given the current load on operators. The probabilistic models can also be employed in call center design. Staffing decisions can be made with the overall system model, constructed by taking into consideration the probabilistic performance of an automated system to route calls successfully, preferences about wait time, characterization of caller volumes, and the time required for addressing callers in a queue waiting for an operator.

Systems and methods can be provided for handling the overall challenge of optimizing a call routing system design, based on a queue-theoretic formulation. In this invention, a decision-theoretic analysis is provided that minimizes the expected wait time for a caller, given observations about the nature and progress of dialog with an automated system.

Assuming that the utility for a user, $u(n,m,w)$, associated with the process of call routing, is a function of the number of dialog steps taken so far with the automated system, $n$, the total additional expected number of steps that will be taken for the current call with an automated routing system, $m$, and the wait time, $w$, associated with a transfer to a human operator should a transfer occur. It is noted that, in the general case, not only should the total time be considered, but the nature of the interaction steps. As an example, people may be extremely frustrated with the poor recognitions of the system, even if the overall outcome is accurate. Beyond the number of turns and wait times, the utility of an interaction for a caller may be influenced by other factors. For example, callers may have a negative emotional reaction to working with an automated system versus a human operator. Such factors can be folded into a cost-benefit analysis of routing actions under uncertainty, considering the number and nature of each step in a dialog.

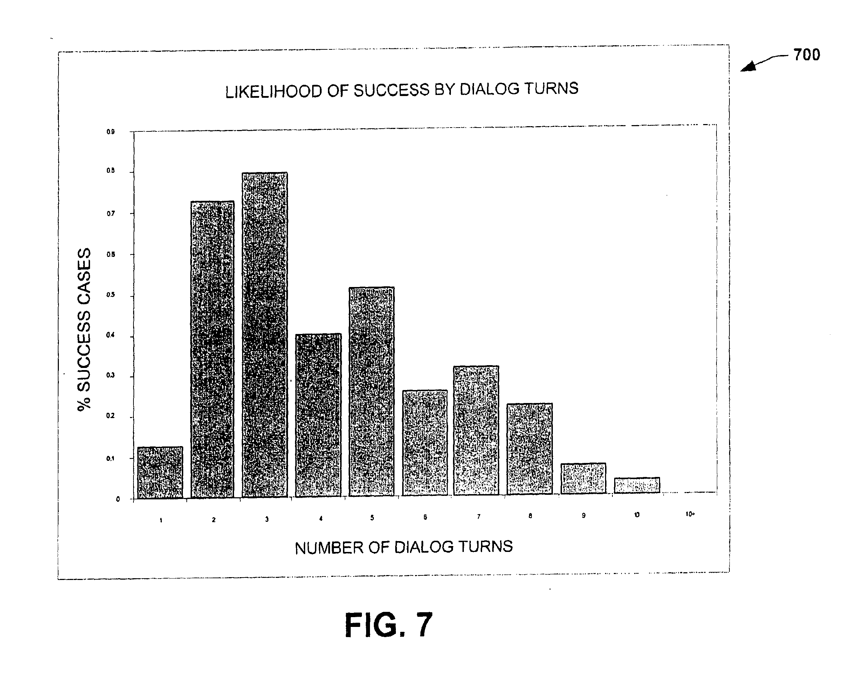

Fig. 7 is a diagram 700 illustrating prior distribution of the expected number of dialog steps conditioned on the success of the automated call routing system. To continue the analysis from the discussion relating to Fig. 6, it can be assumed that the utility of an interaction is captured by the time cost of the interaction. The analysis can be generalized with a conversion of steps to an *effective total time* of an interaction, where frustration is captured by increases in the effective total time of specific steps. Thus, in one class of solutions, an assumption can be made that $u(n,m,w)$ is captured by a measure of effective time, $t(n,m,w)=t(n)+t(m)+w$.

The expected number of additional steps can be computed at each point in a dialog for the case where there is eventual success with the use of the automated system, and the case where the automated routing fails for any reason (*e.g.*, the user presses the "O" key to access a human operator) and the user is immediately routed to a human operator. Figure 7 displays the expected number of steps for success at 0 steps-the outset of an interaction.

The present invention employs $p(\text{xfer}|E,\xi)$ to refer to the probability that the interaction will eventually fail at some point.and the user will be immediately routed to a human operator at that point. At each point in an interaction, pre-compute and make available, $p(\text{xfer}|E,\xi)$ and $p(\text{success}|E,\xi)=1-p(\text{xfer}|E,\xi)$. Also pre-compute the probability distributions, $p(m|E,\text{xfer},\xi)$-the probability distribution over the additional number of steps given an eventual failure, $p(m|E,\text{success},\xi)$—the probability distribution over the number of additional steps given a successful interaction with the automated system, and the expected number of steps for each of these conditions, labeled <m> and <m'>, respectively. The expected additional wait time with continuing the automated interaction, $t^a$ at each point in a dialog under uncertainty in failure is as follows:

**Equation 1:**

$$t^a = p(\text{xfer}|E,\xi)\,(t(<m>) + w) + (1 - p(\text{xfer}|E,\xi))\,t(<m'>)$$

The wait time associated with an immediate transfer into the queue for interacting with a human operator is $w$.

This time varies and the current value can be measured or estimated at any moment by measuring the average recent wait times, or by checking the queue of callers waiting for an operator. At the current position in a dialog, the expected wait time associated with continuing the automated interaction versus making an immediate automated transfer to the waiting queue for a human operator can be compared. That is, continue to determine if $t^a > w$. If the expected wait time is greater for continuing to engage the user with the automated system, then transfer the user to the queue for a human operator.

Beyond taking a myopic analysis, the present invention can perform different amounts of look ahead, and invoke Equation 1 to compute the expected wait times at points further downstream in the dialog, folding in a consideration of the uncertainty that the user will take different paths conditioned on the current path, and will successfully reach each of the downstream points. Employing the decision-theoretic measure promises to minimize the total wait time for users.

Also, the cost of handling a call with a human operator, $C$, for an organization and take an organizational perspective on decision making can be considered. Rather than just modeling the cost to a user in terms of time and frustration, the following, considers an organization's assignment of the utility as a function the cost of the handling of a call by a human operator, in addition to the organizations assessment of the cost associated with the user's time and frustration,

**Equation 2:**

$$Utility\ of\ call\ handling = p(\text{xfer}|E,\xi)\ u(t(n)+t(<m>) + w), C)$$
$$+ (1 - p(\text{xfer}|E,\xi))\ u(t(n)+t(<m'>)).$$

In this aspect, consider an organization's assessment of a utility, $u(t,C)$, capturing the overall cost as a function of the wait time that a caller experiences and the monetary cost of handling a call. Note that the cost may not be constant; evidence about a user's selections and responses may be used to update a probability distribution over the cost $p(C|E,\xi)$, and the expected costs can be substituted in Equation 2.

As another extension, consider also the cost of a total failure of the communication, based on folding in the likelihood that a user will simply hang up in frustration at each point in the interaction, as a function of the path they are on and the wait times in a queue. With this extension, the overall organization's consideration of the expected cost of handling a call is,

**Equation 3:**

$$Utility\ of\ call\ handling =$$

$$1-p(\text{fail}|E,\xi)\ (p(\text{xfer}|E,\xi)\ u(t(n)+ t(<m>) + w,C,\ \text{success}) +$$

$$(1 - p(\text{xfer}|E,\xi)(u(t(n) + t(<m'>)),0,\ \text{success})$$

$$+ p(\text{fail}|E,\xi)\ u(u(t(n)+ t(<m>),0,\ \text{fail})$$

In this aspect, consider the organization's assessment of a utility, $u(t,C,\text{outcome})$, of the cost as a function of the wait time that a caller experiences, the monetary cost of handling a call, and whether the call eventually is completed or fails with a disconnection. The loss of a caller is denoted as $p(\text{fail}|E,\xi)$. Such a utility model can be expanded to include more detailed modeling about whether a caller is lost to an organization forever or until another attempt is made.

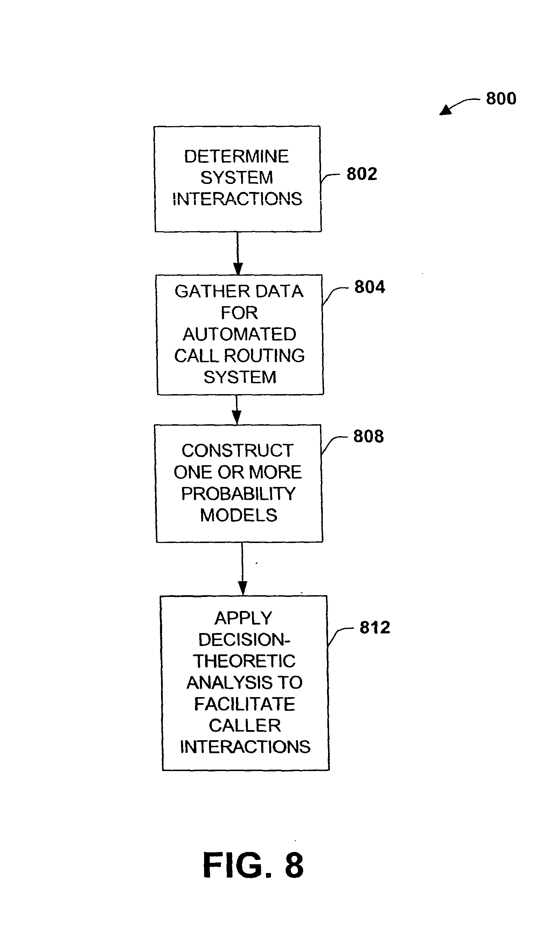

Fig. 8 illustrates a methodology for call routing and decision making in accordance the present invention. While, for purposes of simplicity of explanation, the methodology is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Proceeding to 802, the present invention considers the various interactions and performance of a real-world speech-recognition based on an automated call routing system. As noted above, this can include an analysis of the various system components and operator interactions affecting one or more variables of system performance. At 804, data is gathered to determine various performance aspects of the system. This can include call answering statistics, routing statistics, success or failure statistics based on various factors such as the amount of time a caller has to wait before being directed into a queue to speak with a human operator, for example. At 808, one or more probabilistic models can be constructed from the data that is employed to provide probabilities of different paths through the call routing system, including such information as whether an interaction with the automated system will be successful. At 812, a decision-theoretic analysis of the value of switching to a human operator at different points in a user's interaction with the automated routing system is also provided.

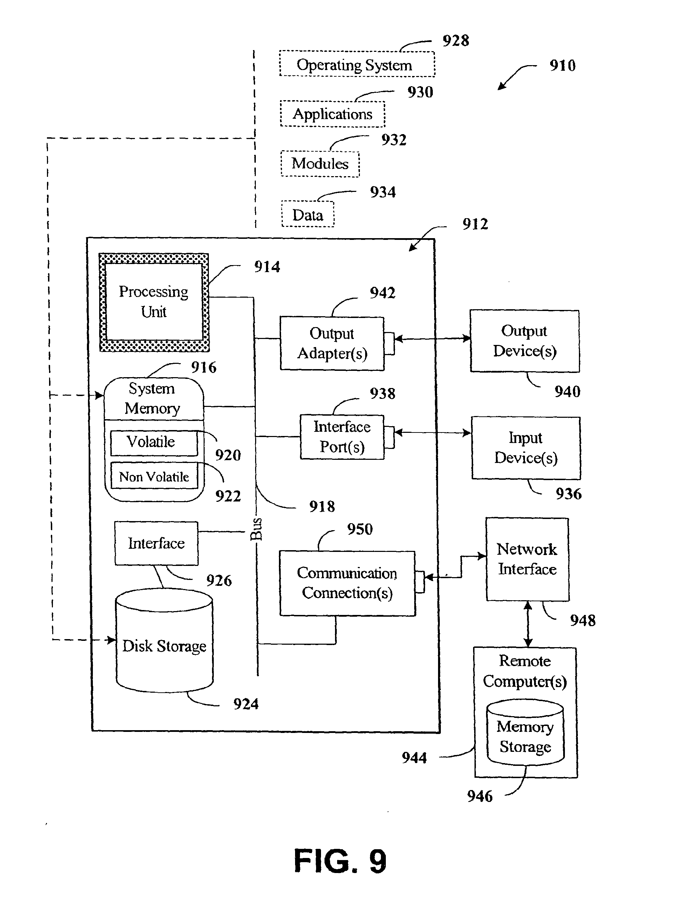

With reference to Fig.9, an exemplary environment 910 for implementing various aspects of the invention includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/non-removable, volatile/non-volatile computer storage media. Fig. 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that Fig 9 describes software that acts as an intermediary between users and the basic computer resources described in suitable operating environment 910. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the present invention can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers, among other output devices 940, that require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

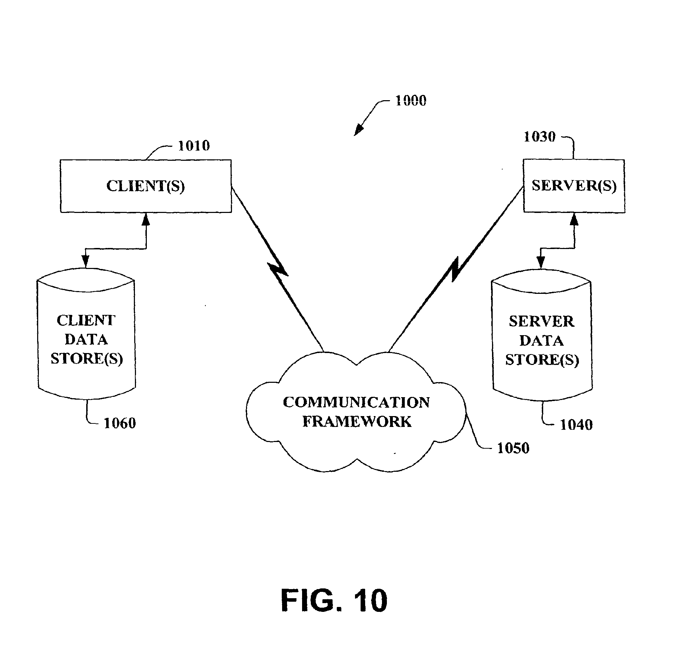

Fig. 10 is a schematic block diagram of a sample-computing environment 1000 with which the present invention can interact. The system 1000 includes one or more client(s) 1010. The client(s) 1010 can be hardware and/or software (*e.g.*, threads, processes, computing devices). The system 1000 also includes one or more server(s) 1030. The server (s) 1030 can also be hardware and/or software (*e.g.*, threads, processes, computing devices). The servers 1030 can house threads to perform transformations by employing the present invention, for example. One possible communication between a client 1010 and a server 1030 may be in the form of a data packet adapted to be transmitted between two or more computer processes. The system 1000 includes a communication framework 1050 that can be employed to facilitate communications between the client(s) 1010 and the server(s) 1030. The client(s) 1010 are operably connected to one or more client data store(s) 1060 that can be employed to store information local to the client(s) 1010. Similarly, the server(s) 1030 are operably connected to one or more server data store(s) 1040 that can be employed to store information local to the servers 1030.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1.  An automated call routing system (100) to guide the transfer of calls to an operator (144), comprising:

    an automated call routing component (110 adapted to route incoming calls to members of an organization and to provide automated responses (120) to one or more callers (130); and
    a decision model (150) associated with the automated call routing component, the decision model being adapted to determine where to direct the calls, wherein the decision model is trained to make one or more statistical or probabilistic decisions based at least in part on a log of past activities and interactions with the call routing component.

2.  The system of claim 1, further comprising a speech recognition component adapted to communicate with the one or more callers.

3.  The system of claim 1, wherein the decision model is trained from a data log (160) that has recorded data.

4.  The system of claim 3, wherein the data log contains data relating to at least one of a Speaker Found, a Speaker Not Found, an OperatorRequest, a Help Request, a Hang Up, a Maximum number of Errors, a Not Ready indication, and an Undefined category.

5.  The system of claim 1, wherein the decision model is adapted to process one or more dialog features (300) including at least one of system and user actions (310), session summary features (320), n-best recognitions features (330), and generalized temporal features (340).

6.  The system of claim 5, wherein the n-best recognitions features are derived from speech recognizer, and the generalized temporal features are included to cover trends between one or more n-best lists.

7. The system of claim 1, wherein the decision model is adapted to employ a probability tree (400) determining a likelihood of success given a sequence of system actions.

8. The system of claim 7, wherein the decision model is adapted to determine, p as a function, of Speak Found|E wherein observational evidence E refers to system actions taken, by counting a number of logged cases along an action sequence that resulted in success over a total number of cases along the sequence, wherein p is a probability.

9. The system of claim 1, wherein the decision model is adapted to employ a dependency network (500) that is adapted to process one or more categories of dialog features as input variables.

10. The system of claim 9, wherein the decision model is adapted to process at least one of a sequence of system actions, a count or number of alternates in an n-best recognitions list, a number of times a user attempted to speak a name, a largest score assigned by a call routing system, and a number of dialog turns defined as a question-answer pair.

11. The system of claim 1, wherein the decision model is adapted to employ a Markov Dependency network (600).

12. The system of claim 11, further comprising a component adapted to increase an amount of data in order to boost a partial model for dialog turns over a marginal model.

13. The system of claim 1, wherein the decision model is adapted to include probabilistic models adapted to perform dynamic decisions about costs and benefits of shifting a caller to a human operator.

14. The system of claim 13, wherein the probabilistic models are adapted to provide predictions about outcomes to enable administrators of automated call routing systems to specify preferences regarding the transfer of callers to a human operator.

15. The system of claim 14, wherein the preferences are represented as a tolerated threshold on failure as a function of a current expected time that callers have to wait for a human operator, given a current load on operators, wherein the one or more probabilistic models can also be employed in call center design.

16. The system of claim 1, wherein the decision model is adapted to facilitate staffing decisions by taking into consideration at least one of probabilistic performance of an automated system to route calls successfully, preferences about wait time, characterization of caller volumes, and time required for addressing callers in a queue waiting for an operator.

17. The system of claim 16, wherein the queue is optimized based on a queue-theoretic formulation.

18. A computer readable medium having computer readable instructions stored thereon for implementing the call routing component and the decision model of claims 1-17.

19. The system of claim 1, comprising:

means for interacting with a caller; and
means for performing a decision theoretic analysis before routing the call to a member of the organization, the decision-theoretic includes a cost benefit analysis weighing the benefits of transferring the call to an operator.

20. A method for automatically routing calls, comprising:

determining a decision model for employment with a call routing system;
training the decision model to make one or more statistical or probabilistic decisions based at least in part on a log of past activities and interactions with the call routing component
automatically directing calls to at least one of an organization member and an operator based at least in part on the one or more statistical decisions.

21. The method of claim 20, the decision model is applied to a user function, associated with a process of call routing, the user function is a function of a number of automated dialog steps taken, n, a total expected number of steps that will be taken with an automated routing system, m, and a wait time, w, for transferring to a human operator.

22. The method of claim 21, further comprising processing user frustrations.

23. The method of claim 21, further comprising processing negative emotional reactions to working with an automated system versus a human operator.

24. The method of claim 21, further comprising performing a cost-benefit analysis of routing actions under uncertainty, considering a number and nature of at least one step in a dialog.

25. The method of claim 20, further comprising determining a utility of an interaction in accordance with a time cost of an interaction.

26. The method of claim 25, further comprising generalizing a conversion of steps to an effective total time of an interaction, wherein frustration is captured by increases in an effective total time of specific steps.

27. The method of claim 25, further comprising a pre-computation that is performed to yield, $p(xfer|E, \xi)$ and $p(success|E, \xi) = 1 - p(xfer|E,\xi)$.

28. The method of claim 25, further comprising a pre-computation of probability distributions, $p(m|E,xfer, \xi)$ and $p(m|E,success, \xi)$ and an expected number of steps for conditions, labeled <m> and <m'>, respectively.

29. The method of claim 20, further comprising determining an expected total wait time with continuing an automated interaction, $t^a$ at respective points in a dialog under uncertainty in failure as:

$$t^a = p(xfer|E, \xi)\,(t(<m>) + w)$$

$$+ (1 - p(xfer|E, \xi))\,(t(<m'>).$$

wherein a wait time associated with a courteous immediate transfer into a queue for interacting with a human operator is $w$.

30. The method of claim 29, further comprising determining a utility of call handling as follows:

$$\text{Utility of call handling} = p(xfer|E, \xi)\,u(t(n)+t(<m>) + w), C)$$

$$+ (1 - p(xfer|E, \xi))\,u(t(n)+t(<m'>).$$

31. The method of claim 30, further comprising determining the utility of call handling as follows:

$$\text{Utility of call handling} =$$

$$1 - p(fail|E, \xi)\,(p(xfer|E, \xi)\,u(t(n)+ t(<m>) + w, C, success) +$$

$$(1 - p(xfer|E, \xi)(u(t(n) + t(<m'>),0, success)$$

$$+ p(fail|E, \xi)\,u(u(t(n)+ t(<m>), 0, fail).$$

32. The method of claim 31, where cost of handling the call with a human operator $C$ depends on needs or goals of the caller, and is inferred from evidence.

33. The method of claim 31, further comprising determining expected costs via inference of a probability distribution over Cost given evidence gathered so far, $p(C|E,\xi)$.

34. The method of claim 20, further comprising providing online sensing of current wait times for calls being transferred to a human operator.

35. The method of claim 20, further comprising at least one of:

creating an end-to-end system that continues to at least one of log, monitor, and build models; and
automatically setting parameters, generating reports, and generating traces, for validation and auditing of actions.

36. The method of claim 20 supporting an application including at least one of touch-tone routing and speech recognition.

**Patentansprüche**

1. Ein automatisiertes Rufumleitungssystem (call routing system) (100), um die Weitergabe von Anrufen an einen Telefonisten (operator) (144) zu leiten, umfassend:

eine automatisierte Rufumleitungskomponente (110), die angepasst ist, eingehende Anrufe an Mitglieder einer Organisation zu leiten, und automatisierte Antworten (120) an einen oder mehrere Anrufer (130) bereitzustellen; und
ein Entscheidungsmodell (150) zugehörig zu der automatisierten Rufumleitungskomponente, wobei das Entscheidungsmodell angepasst ist, zu ermitteln, wohin die Anrufe gelenkt werden, wobei das Entscheidungsmodell trainiert ist, um eine oder mehrere statistische oder probabilistisch Entscheidungen zumindest teilweise auf einem Protokoll (log) mit vergangenen Aktivitäten und Interaktionen mit der Rufumleitungskomponente zu fällen.

2. System gemäß Anspruch 1, das des Weiteren eine Spracherkennungskomponente umfasst, die angepasst ist, mit dem einen oder den mehreren Anrufern zu kommunizieren.

3. System gemäß Anspruch 1, wobei das Entscheidungsmodell mit Hilfe eines Datenprotokolls (160) trainiert ist, das aufgezeichnete Daten enthält.

4. System gemäß Anspruch 3, wobei das Datenprotokoll Daten enthält, die sich auf folgende Kategorien beziehen: Sprecher gefunden, keinen Sprecher gefunden, Telefonistenanfrage, Hilfeanfrage, Aufgelegt, maximale Anzahl von Fehlern, Nicht-bereit-Indikation, und/oder eine undefinierte Kategorie.

5. System gemäß Anspruch 1, wobei das Entscheidungsmodell angepasst ist, ein oder mehrere Dialogmerkmale (300) zu verarbeiten, die System- und Benutzeraktionen (310), Sitzungszusammenfassungsmerkmale (320), die n-besten Erkennungsmerkmale (330), und/oder verallgemeinerte zeitliche Merkmale (340) einschließen.

6. System gemäß Anspruch 5, wobei die n-besten Erkennungsmerkmale von einem Spracherkenner erlangt werden, und die verallgemeinerten zeitlichen Merkmale eingeschlossen sind, um Trends zwischen einer oder mehreren n-besten Listen zu erfassen.

7. System gemäß Anspruch 1, wobei das Entscheidungsmodell angepasst ist, einen Wahrscheinlichkeitsbaum (400) einzusetzen, der eine Wahrscheinlichkeit des Erfolges bei einer gegebenen Sequenz von Systemaktionen ermittelt.

8. System gemäß Anspruch 7, wobei das Entscheidungsmodell angepasst ist, p als eine Funktion von SpeakFound|E zu ermitteln, wobei sich Beobachtungsnachweis E auf Systemaktionen bezieht, die durch das Zählen einer Anzahl von protokollierten Fällen entlang einer Aktionssequenz, die erfolgreich endete, über eine gesamte Anzahl von Fällen entlang der Sequenz erfasst wurden, und wobei p eine Wahrscheinlichkeit ist.

9. System gemäß Anspruch 1, wobei das Entscheidungsmodell angepasst ist, ein Abhängigkeitsnetzwerk (500) einzusetzen, das angepasst ist, eine oder mehrere Kategorien von Dialogmerkmalen als Eingabevariablen zu verarbeiten.

**10.** System gemäß Anspruch 9, wobei das Entscheidungsmodell angepasst ist, eine Sequenz von Systemaktionen, einen Zähler oder eine Anzahl von Alternativen (altemates) in einer Liste der n-besten Erkennungen, eine Zahl wie oft ein Benutzer versuchte, einen Namen zu sprechen, eine höchste Punktzahl, die durch ein Rufumleitungssystem zugewiesen wurde, und/oder eine Anzahl von Dialogwechseln, die als ein Frage-Antwort-Paar definiert sind, zu verarbeiten.

**11.** System gemäß Anspruch 1, wobei das Entscheidungsmodell angepasst ist, ein Markov-Abhängigkeitsnetzwerk (600) einzusetzen.

**12.** System gemäß Anspruch 11, das des Weiteren eine Komponente umfasst, die angepasst ist, eine Menge an Daten zu vergrößern, um ein partielles Modell für Dialogwechsel über ein marginales Modell zu heben.

**13.** System gemäß Anspruch 1, wobei das Entscheidungsmodell angepasst ist, probabilistische Modelle einzuschließen, die angepasst sind, dynamische Entscheidungen über Kosten und Vorteile des Verlegens eines Anrufers zu einem menschlichen Telefonisten (operator) durchzuführen.

**14.** System gemäß Anspruch 13, wobei die probabilistischen Modelle angepasst sind, um Vorhersagen über Resultate bereitzustellen, um Administratoren von automatisierten Rusumleitungssystemen in die Lage zu versetzen, Präferenzen bezüglich der Weitergabe von Anrufern an einen menschlichen Telefonisten zu spezifizieren.

**15.** System gemäß Anspruch 14, wobei die Präferenzen durch einen tolerierten Schwellenwert für einen Fehler als eine Funktion der aktuellen erwarteten Zeit, die Anrufer auf einen menschlichen Telefonisten zu warten haben, darstellen, wobei eine aktuelle Belastung der Telefonisten gegeben ist, und wobei das eine oder die mehreren probabilistischen Modelle ebenso im Call-Center-Design eingesetzt werden können.

**16.** System gemäß Anspruch 1, wobei das Entscheidungsmodell angepasst ist, Entscheidungen bezüglich Personalbesetzung durch das in Betracht ziehen von einer probabilistischen Leistungsfähigkeit eines automatisierten Systems zum erfolgreichen Umleiten von Anrufen, Präferenzen über die Wartezeit, Charakterisierung von Anrufervolumen, und/oder einer Zeit, die erforderlich ist, um Anrufer in einer Warteschlange, die auf einen Telefonisten warten, anzusprechen (addressing), zu ermöglichen.

**17.** System gemäß Anspruch 16, wobei die Warteschlange basierend auf einer warteschlangentheoretischen Formulierung optimiert ist.

**18.** Computerlesbarer Datenträger, der computerlesbare Instruktionen zum Implementieren der Rufumleitungskomponente und des Entscheidungsmodells gemäß Ansprüchen 1 bis 17 darauf gespeichert hat.

**19.** System gemäß Anspruch 1, umfassend:

Mittel zum Interagieren mit einem Anrufer; und
Mittel zum Durchführen einer entscheidungstheoretischen Analyse bevor der Anrufer zu einem Mitglied der Organisation gelenkt wird, wobei die Entscheidungstheoretik eine Kosten-Nutzen-Analyse einschließt, die die Vorteile des Transferierens des Anrufs an einen Telefonisten abwägt.

**20.** Verfahren zum automatischen Umleiten von Anrufen, umfassend:

Ermitteln eines Entscheidungsmodells zum Einsatz mit einem Rufumleitungssystem (call routing system);
Trainieren des Entscheidungsmodells, um eine oder mehrere statistische oder probabilistische Entscheidungen zumindest teilweise basierend auf einem Protokoll (log) mit vergangenen Aktivitäten und Interaktionen mit der Rufumleitungskomponente zu fällen;
Automatisches Lenken von Anrufen zu einem Organisationsmitglied und/oder einem Telefonisten (operator) zumindest teilweise basierend auf der einen oder den mehreren statistischen Entscheidungen.

**21.** Verfahren gemäß Anspruch 20, wobei das Entscheidungsmodell auf eine Benutzerfunktion angewendet wird, die mit einem Prozess des Anrufumleitens assoziiert ist, wobei die Benutzerfunktion eine Funktion einer Anzahl von durchgeführten automatisierten Dialogschritten, n, einer gesamten erwarteten Anzahl von Schritten, die mit einem automatisierten Umleitungssystem gemacht werden, m, und einer Wartezeit, w, zum Transferieren zu einem menschlichen Telefonisten, ist.

**22.** Verfahren gemäß Anspruch 21, das des Weiteren das Verarbeiten von Benutzerfrustrationen umfasst.

**23.** Verfahren gemäß Anspruch 21, das des Weiteren das Verarbeiten von negativen emotionalen Reaktionen auf das Arbeiten mit einem automatisierten System verglichen mit einem menschlichen Telefonisten umfasst.

**24.** Verfahren gemäß Anspruch 21, das des Weiteren das Durchführen einer Kosten-Nutzen-Analyse von Umleitungsaktionen mit Ungewissheit umfasst, wobei eine Anzahl und eine Herkunft (nature) von mindestens einem Schritt in einem Dialog in Betracht gezogen wird.

**25.** Verfahren gemäß Anspruch 20, das des Weiteren das Ermitteln eines Nutzens einer Interaktion im Zusammenhang mit Zeitkosten für eine Interaktion umfasst.

**26.** Verfahren gemäß Anspruch 25, das des Weiteren das Verallgemeinern einer Konvertierung von Schritten zu einer effektiven Gesamtzeit einer Interaktion umfasst, wobei Frustration durch die Zunahmen einer effektiven Gesamtzeit von bestimmten Schritten erfasst wird.

**27.** Verfahren gemäß Anspruch 25, das des Weiteren eine Vorberechnung umfasst, die durchgeführt wird, folgendes zu liefern (yield): $p(xfer|E, \xi)$ und $p(success|E, \xi) = 1 - p(xfer| E, \xi)$.

**28.** Verfahren gemäß Anspruch 25, das des Weiteren eine Vorberechnung von Wahrscheinlichkeitsverteilungen, $p(m|E, xfer, \xi)$ und $p(m|E, success, \xi)$ und einer erwarteten Anzahl von Schritten für Bedingungen, die mit <m> bzw. <m'> bezeichnet sind, umfasst.

**29.** Verfahren gemäß Anspruch 20, das des Weiteren das Ermitteln einer erwarteten Gesamtwartezeit, wobei mit einer automatisierten Interaktion fortgesetzt wird, $t^a$ zu respektiven Punkten in einem Dialog unter Fehlerungewissheit wie folgt umfasst:

$$t^a = p(xfer \mid E, \xi) \, (t(<m>) + w)$$

$$+ (1 - p(xfer \mid E, \xi)) \, (t(<m'>),$$

wobei eine Wartezeit zugehörig zu einem zuvorkommenden sofortigen Transfer in eine Warteschleife zur Interaktion mit einem menschlichen Telefonisten w ist.

**30.** Verfahren gemäß Anspruch 29, das des weiteren das Ermitteln eines Nutzens einer Anrufhandhabung wie folgt umfasst:

$$\text{Nutzen einer Anrufhandhabung} = p(xfer \mid E, \xi) \, u(t(n)+t(<m>)+w), C)$$

$$+ (1-p(xfer \mid E, \xi)) \, u(t(n)+t(<m'>).$$

**31.** Verfahren gemäß Anspruch 30, das des Weiteren das Ermitteln des Nutzens einer Anrufhandhabung wie folgt umfasst:

$$\text{Nutzen einer Anrufhandhabung} =$$

$$1-p(fehlgeschlagen \mid E, \xi) \, (p(xfer \mid E, \xi) \, u(t(n)+t(<m>) + w, C, erfolgreich) +$$

$$(1-p(xfer \mid E, \xi)(u(t(n) + t(<m'>),0, \text{erfolgreich})$$

$$+p(\text{fehlgeschlagen} \mid E, \xi)\ u(u(t(n)+t(<m>),0, \text{fehlgeschlagen}).$$

**32.** Verfahren gemäß Anspruch 31, wobei die Kosten für die Handhabung des Anrufs durch einen menschlichen Telefonisten C von den Bedürfnissen oder Zielen des Anrufers abhängen, und sich aus Beweisen schließen lässt.

**33.** Verfahren gemäß Anspruch 31, das des Weiteren das Ermitteln von erwarteten Kosten über einen Rückschluss der Wahrscheinlichkeitsverteilung über Kosten bei gegebenem, bisher gesammelten Beweis umfasst, $p(C \mid E, \xi)$.

**34.** Verfahren gemäß Anspruch 20, das des Weiteren das Bereitstellen einer Online-Erkennung von aktuellen Wartezeiten für Anrufe, die zu einem menschlichen Telefonisten übertragen wurden, umfasst.

**35.** Verfahren gemäß Anspruch 20, das des Weiteren mindestens eines der folgenden umfasst:

Erzeugen eines durchgehenden Systems (end-to-end system), das sich zu Protokoll, Überwachungs-, und/ oder Aufbaumodellen fortsetzt; und
automatisches Setzen von Parametern, Erzeugen von Berichten und Erzeugen von Spuren zur Validierung und Auditierung von Aktionen.

**36.** Verfahren gemäß Anspruch 20, das eine Anwendung unterstützt, die Tonwahlumleitung (touch tone routing) und/ oder Spracherkennung einschließt.

## Revendications

**1.** Système d'acheminement d'appels automatisé (100) pour guider le transfert d'appels vers un opérateur (144), comprenant :

un organe d'acheminement d'appels automatisé (110) adapté pour acheminer des appels entrants vers des membres d'une organisation et pour fournir des réponses automatisées (120) à un ou plusieurs appelants (130) ; et
un modèle de décision (150) associé à l'organe d'acheminement d'appels automatisé, le modèle de décision étant adapté pour déterminer vers où diriger les appels et étant entraîné pour prendre une ou plusieurs décisions statistiques ou probabilistes au moins en partie à partir d'un journal d'activités et d'interactions antérieures avec l'organe d'acheminement d'appels.

**2.** Système selon la revendication 1, comprenant également un organe de reconnaissance vocale adapté pour communiquer avec le ou les appelants.

**3.** Système selon la revendication 1, dans lequel le modèle de décision est entraîné à partir d'un journal de données (160) qui comporte des données enregistrées.

**4.** Système selon la revendication 3, dans lequel le journal de données contient des données relatives à l'un au moins des éléments du groupe constitué par un locuteur trouvé, un locuteur non trouvé, une demande d'opérateur, une demande d'aide, un raccrochement, un nombre maximum d'erreurs, une indication d'indisponibilité et une catégorie indéfinie.

**5.** Système selon la revendication 1, dans lequel le modèle de décision est adapté pour traiter une ou plusieurs caractéristiques de dialogue (300) comprenant l'une au moins des caractéristiques du groupe constitué par des actions de système ou d'utilisateur (310), des caractéristiques récapitulatives de session (320), des caractéristiques des n meilleures reconnaissances (330) et des caractéristiques temporelles généralisées (340).

**6.** Système selon la revendication 5, dans lequel les caractéristiques des n meilleures reconnaissances sont obtenues à partir d'un appareil de reconnaissance vocale, et les caractéristiques temporelles généralisées sont incluses pour couvrir des tendances entre une ou plusieurs listes des n meilleures.

**7.** Système selon la revendication 1, dans lequel le modèle de décision est adapté pour utiliser un arbre de probabilité (400) qui détermine une probabilité de succès en fonction d'une séquence d'actions de système.

**8.** Système selon la revendication 7, dans lequel le modèle de décision est adapté pour déterminer p en fonction de SpeakFound| E, la preuve observationnelle E se référant à des actions de système exécutées, en comptant un nombre de cas enregistrés au cours d'une séquence d'actions qui s'est traduite par un succès par rapport à un nombre total de cas au cours de la séquence, p étant une probabilité.

**9.** Système selon la revendication 1, dans lequel le modèle de décision est adapté pour utiliser un réseau de dépendance (500) qui est adapté pour traiter une ou plusieurs catégories de caractéristiques de dialogue comme variables d'entrée.

**10.** Système selon la revendication 9, dans lequel le modèle de décision est adapté pour traiter au moins une séquence d'actions de système, un comptage ou nombre d'alternatives dans une liste des n meilleures, un nombre de tentatives de prononciation d'un nom par un utilisateur, une note maximale attribuée par un système d'acheminement d'appels et un nombre de tours de dialogue définis comme un couple de question-réponse.

**11.** Système selon la revendication 1, dans lequel le modèle de décision est adapté pour utiliser un réseau de dépendance de Markov (600).

**12.** Système selon la revendication 11, comprenant également un organe adapté pour augmenter un nombre de données afin d'enrichir un modèle partiel pour des tours de dialogue par rapport à un modèle marginal.

**13.** Système selon la revendication 1, dans lequel le modèle de décision est adapté pour comprendre des modèles probabilistes adaptés pour prendre des décisions dynamiques sur les coûts et les avantages du transfert d'un appelant à un opérateur humain.

**14.** Système selon la revendication 13, dans lequel les modèles probabilistes sont adaptés pour fournir des prédictions sur les résultats de la possibilité offerte à des administrateurs de systèmes d'acheminement d'appels automatisés de spécifier des préférences concernant le transfert d'appelants à un opérateur humain.

**15.** Système selon la revendication 14, dans lequel les préférences sont représentées sous la forme d'un seuil d'échec toléré en fonction d'un temps d'attente prévu actuel d'appelants pour obtenir un opérateur humain, compte tenu d'une charge actuelle des opérateurs, le ou les modèles probabilistes pouvant également être utilisés pour la conception de centres d'appels.

**16.** Système selon la revendication 1, dans lequel le modèle de décision est adapté pour faciliter des décisions en matière de personnel en prenant en considération l'un au moins des éléments du groupe constitué par une capacité probabiliste d'un système automatisé à acheminer des appels avec succès, des préférences concernant un temps d'attente, une caractérisation de volumes d'appelants et un temps nécessaire pour traiter le cas d'appelants dans une file d'attente pour obtenir un opérateur.

**17.** Système selon la revendication 16, dans lequel la file d'attente est optimisée à partir d'une formulation théorique de file d'attente.

**18.** Support lisible par ordinateur sur lequel sont stockées des instructions lisibles par ordinateur pour mettre en oeuvre l'organe d'acheminement d'appels et le modèle de décision des revendications 1 à 17.

**19.** Système selon la revendication 1, comprenant :

des moyens pour interagir avec un appelant ; et
des moyens pour effectuer une analyse théorique de décision avant d'acheminer l'appel vers un membre de l'organisation, l'analyse théorique de décision comprenant une analyse des avantages en termes de coûts qui pondère les avantages du transfert de l'appel à un opérateur.

**20.** Procédé pour acheminer automatiquement des appels, comprenant les étapes qui consistent à :

déterminer un modèle de décision à utiliser avec un système d'acheminement d'appels ;
entraîner le modèle de décision à prendre une ou plusieurs décisions statistiques ou probabilistes au moins en partie à partir d'un journal d'activités et d'interactions antérieures avec l'organe d'acheminement d'appel, et diriger automatiquement les appels vers un membre d'une organisation et/ou un opérateur au moins en partie en fonction de la décision statistique ou des décisions statistiques.

**21.** Procédé selon la revendication 20, dans lequel le modèle de décision est appliqué à une fonction d'utilisateur associée à un processus d'acheminement d'appels, la fonction d'utilisateur étant fonction d'un nombre d'étapes de dialogue automatisé effectuées, n, d'un nombre total prévu d'étapes qui seront effectuées avec un système d'acheminement automatisé, m, et d'un temps d'attente w de transfert à un opérateur humain.

**22.** Procédé selon la revendication 21, comprenant également le traitement de frustrations d'utilisateurs.

**23.** Procédé selon la revendication 21, comprenant également le traitement de réactions émotionnelles négatives au travail avec un système automatisé par rapport à un opérateur humain.

**24.** Procédé selon la revendication 21, comprenant également l'exécution d'une analyse des coûts/avantages d'opérations d'acheminement dans des conditions d'incertitude, compte tenu d'un nombre et de la nature d'au moins une étape du dialogue.

**25.** Procédé selon la revendication 20, comprenant également la détermination d'une utilité d'une interaction en fonction d'un coût en termes de temps d'une interaction.

**26.** Procédé selon la revendication 25, comprenant également la généralisation d'une conversion d'étapes en un temps total effectif d'une interaction, une frustration étant rendue par des augmentations d'un temps total effectif d'étapes spécifiques.

**27.** Procédé selon la revendication 25, comprenant également un calcul préalable qui est exécuté pour donner $p(xfer|E, \xi)$ et $p(succès|E,\xi) = 1-p(xfer|E,\xi)$.

**28.** Procédé selon la revendication 25, comprenant également un calcul préalable de distributions de probabilités $p(m|E,xfer,\xi)$ et $p(m|E, succès,\xi)$ et un nombre prévu d'étapes pour des conditions respectivement marquées <m> et <m'>.

**29.** Procédé selon la revendication 20, comprenant également la détermination d'un temps d'attente total prévu en cas de poursuite d'une interaction automatisée, $t^a$, à des moments respectifs d'un dialogue dans des conditions d'incertitude en termes d'échec, sous la forme de :

$$t^a = p(xfer|E, \xi)(t(<m>)+w)$$
$$+(1-p(xfer|E, \xi))(t(<m'>)$$

où un temps d'attente associé à un transfert immédiat courtois dans une file d'attente pour obtenir une interaction avec un opérateur humain est w.

**30.** Procédé selon la revendication 29, comprenant également la détermination d'une utilité de traiter un appel comme suit :

$$Utilité \ de \ traiter \ l'appel =$$
$$p(xfer|E,\xi)u(t(n)+t(<m>)+w),C)$$
$$+(1-p(xfer|E,\xi))u(t(n)+t(<m'>).$$

**31.** Procédé selon la revendication 30, comprenant également la détermination de l'utilité de traiter un appel comme suit :

```
Utilité de traiter l'appel =
1-p(échec|E,ξ)(p(xfer|E,ξ)u(t(n)+t(<m>)+w,C,succès)
+(1-p(xfer|E,ξ)(u(t(n)+t(<m'>),0,succès)
```

```
    + p(échec|E,ξ)u(u(t(n)+t(<m>),0,échec).
```

**32.** Procédé selon la revendication 31, dans lequel le coût du traitement de l'appel avec un opérateur humain C dépend des besoins ou des buts de l'appelant et est obtenu par inférence à partir de preuves.

**33.** Procédé selon la revendication 31, comprenant également la détermination de coûts prévus par voie d'inférence d'une distribution de probabilité par rapport à un coût en fonction de preuves rassemblées jusqu'ici, $p(C|E,\xi)$.

**34.** Procédé selon la revendication 20, comprenant également l'étape qui consiste à prévoir la détection en ligne de temps d'attente actuels pour des appels en cours de transfert à un opérateur humain.

**35.** Procédé selon la revendication 20, comprenant également l'une au moins des étapes de :

création d'un système de bout en bout qui se poursuit jusqu'à l'une au moins des opérations de tenue de journal, de contrôle et de construction de modèles ; et
définition automatique de paramètres, production de comptes rendus et production de traces en vue de la validation et de l'évaluation d'opérations.

**36.** Procédé selon la revendication 20, permettant une application comprenant l'acheminement par clavier à fréquences vocales et/ou la reconnaissance vocale.

100

CALLERS 130

CALLS

CALL ROUTING SYSTEM 110

HUMAN OPERATORS 144

CALL ROUTED TO IDENTIFIED INDIVIDUAL 140

AUTOMATED RESPONSES 120

DECISION MODELS 140

DATA LOGS 160

**FIG. 1**

SESSION OUTCOMES

FIG. 2

EP 1 494 499 B1

**FIG. 3**

EP 1 494 499 B1

FIG. 4

FIG. 5

**FIG. 6**

LIKELIHOOD OF SUCCESS BY DIALOG TURNS

FIG. 7

FIG. 8

**FIG. 9**

28

1000

1010

CLIENT(S)

1030

SERVER(S)

CLIENT
DATA
STORE(S)

1060

COMMUNICATION
FRAMEWORK

1050

SERVER
DATA
STORE(S)

1040

## FIG. 10

**EP 1 494 499 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003035532 A1
- EP 1176838 A